# EUROPÄISCHE PATENTSCHRIFT

(11) **EP 0 645 287 B1**
(45) Veröffentlichungstag und Bekanntmachung des Hinweises auf die Patenterteilung: **10.12.1997**
(21) Anmeldenummer: 94118166.1
(22) Anmeldetag: 20.09.1991
(51) Int. Cl.: B60S 1/34

(54) **Scheibenwischeranlage**
Windscreen-wiper system
Système d'essuie-glaces

(30) Priorität: 04.10.1990 AT 2001/90
(43) Veröffentlichungstag der Anmeldung: 29.03.1995
(62) Teilanmeldung aus: 91916306.3
(73) Patentinhaber: BATTLOGG, Stefan, A-6771 St. Anton im Montafon (AT)
(72) Erfinder: BATTLOGG, Stefan, A-6771 St. Anton im Montafon (AT)
(74) Vertreter: Hofinger, Engelbert, DDr.

(56) Entgegenhaltungen:
- GB-A- 2 155 315

## Beschreibung

Die Erfindung betrifft eine Scheibenwischeranlage für Fahrzeuge mit einer über ihre Breite gekrümmten Fahrzeugscheibe, mit mindestens einem angetriebenen Wischerarm, an dessen freiem Ende ein Wischerblatt vorgesehen ist, das in der Position zum Wischerarm veränderbar ist, und mit einem vom Wischerarmantrieb abgeleiteten Antrieb für die Positionsänderung des Wischerblattes, der eine Steuerkurve und ein während der Verschwenkung des Wischerarmes entlang der Steuerkurve geführtes Abtastelement umfaßt, wobei die Steuerkurve an einer Platte ausgebildet ist, die auf dem freien Ende des Wischerarmes um eine zur Wischerarmschwenkachse parallele Achse drehbar gelagert und der der abgeleitete Antrieb zugeordnet ist

Insbesondere bei Personenkraftwagen weisen Windschutzscheiben eine Wölbung in ihrer Breite auf, die sich in den Seitenrandbereichen meist verstärkt. Ein über die gewölbte Scheibe schwenkender Wischerarm weist daher nur eine Stellung auf, in der das Wischerblatt senkrecht auf der Scheibe aufliegt, während sich in allen übrigen Stellungen innerhalb des Wischbereiches eine Abweichung aus der 90°-Stellung ergibt. Diese Abweichung von der Senkrechten, die auch Normalenfehler genannt wird, beeinflußt unter anderem die Reinigungsgüte, das Umlegeverhalten des Wischgummis in den Umkehrpunkten und die Aerodynamik der Wischeranlage.

Es wurde daher versucht, Scheibenwischeranlagen zur Verfügung zu stellen, in denen das Wischerblatt während der Schwenkbewegung zusätzlich verdreht wird. So ist etwa aus der GB-A 2 155 315 eine Scheibenwischeranlage der eingangs genannten Art bekannt geworden, bei der das Wischerblatt auf einem Querlenker befestigt ist, der über zwei Kugelgelenke auf dem Wischerarm und einem Parallelogrammlenker gelagert ist, wobei von der auf dem Wischerarmende fixierten Lagerkugel zwei Führungsstifte abstehen, die in eine schräge Ringnut des Querlenkers eingreifen. Aufgrund der Parallelführung und der Schrägführung in der Ringnut verdreht sich beim Schwenken des Wischerames der Querlenker und mit diesem das auf dem Querlenker fixierte Wischerblatt, sodaß es im wesentlichen im Auflagewinkel auf der Scheibe konstant bleibt. Von Nachteil ist, daß sich das gesamte Parallelogramm verwindet.

Die Erfindung hat es sich zur Aufgabe gestellt, eine Scheibenwischeranlage zu schaffen, bei der für die, die Beibehaltung des Auflagewinkels des Wischerblattes auf der Scheibe erforderliche Bewegung nur das Wischerblatt, nicht jedoch Teile der Parallelführung auf dem freien Ende des Wischerames verschwenkt werden.

Erfindungsgemäß wird dies dadurch erreicht, daß das Wischerblatt um eine Querachse schwenkbar an einem Lagerteil und der Lagerteil um eine parallel zum Wischerblatt sich erstreckende Längsachse schwenkbar an einem am freien Ende des Wischerarms vorgesehenen Tragteil angeordnet ist, und daß das Abtastelement am Lagerteil des Wischerblattes vorgesehen ist.

Auf diese Weise wird eine Anordnung erzielt, in der unabhängig von der Lage des Wischerarmes die Ausrichtung der die Steuerkurve bestimmenden Krümmungsachse in bezug auf das Fahrzeug nicht verändert ist. Die am freien Ende üblicherweise vorhandene senkrecht zum Wischerblatt verlaufende Schwenkachse liegt dabei vor oder nach bzw. ober- oder unterhalb der Längsachse, sodaß zwischen dem Wischerarm und dem Wischerblatt eine Art von Kreuzgelenk ausgebildet ist. Gegebenenfalls können die Längsachse und die Schwenkachse auch einander schneiden.

Zur Führung der Platte dient insbesondere eine Parallelführung zum Wischerarmschwenkantrieb, die durch einen fahrzeugfest angelenkten Parallelogrammlenker ausgebildet sein kann.

Nachstehend werden nun Ausführungsbeispiele der Erfindung an Hand der Figuren der beiliegenden Zeichnungen näher beschrieben.

Es zeigen:
- Fig. 1: eine Draufsicht auf eine Windschutzscheibe von Kraftfahrzeugen mit einer erfindungsgemäßen Scheibenwischeranlage,
- Fig. 2 bis 4: eine erste Ausführung, wobei Fig. 2 und 4 Draufsichten auf die Wischerblatthalterung in einer mittleren und einer rechts verschwenkten Arbeitsstellung sind, und Fig. 3 ein Teilschnitt durch den Wischerarm ist,
- Fig. 5: eine zweite Ausführung im Teilschnitt, und
- Fig. 6 und 7: eine dritte Ausführung in mittlerer und in einer rechts verschwenkten Arbeitsstellung jeweils im Teilschnitt.

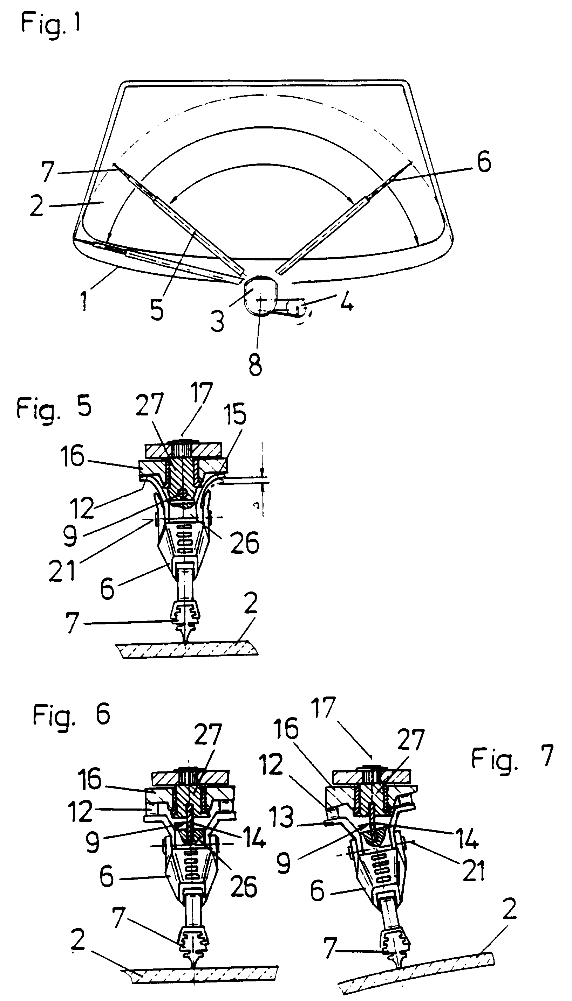

Bei erfindungsgemäßen Scheibenwischeranlagen wird der Normalenfehler, also die Abweichung des Wischerblattes vom senkrechten Auflagewinkel auf der Fahrzeugscheibe 2 verringert bzw. vermieden. Die Scheibenwischeranlagen lassen sich sowohl als einarmige als auch als doppelarmige Scheibenwischer ausbilden, wobei der Wischerarm um die Wischerarmschwenkachse 8 schwenkt; mehrere Positionen sind in Fig. 1 ersichtlich. Unterhalb der Fahrzeugscheibe 2 ist am Fahrzeug 1 der Schwenkantrieb 3 mit Antriebsmotor 4 in bekannter Weise installiert.

Das Wischerblatt 6 ist annähernd parallel zum Wischerarm 5 an dessen freiem Ende um eine Querachse 21 schwenkbar in einem Lagerteil 26 angeordnet, der um eine parallel zum Wischerblatt 6 sich erstreckende Längsachse 9 in einem Tragteil 27 des Wischerarmes verschwenkbar ist. Die Verschwenkbarkeit um die zum Wischerblatt 6 parallele Längsachse 9 erlaubt die Vermeidung des Normalenfehlers, das heißt die Beibehaltung einer zur Fahrzeugscheibe 1 etwa senkrechten Stellung des Wischerblattes 6 samt Wischergummi 7 unabhängig von der Krümmung der Scheibe und dem Schwenkwinkel des Wischerarmes 5. Zur Festlegung bzw. Führung des Wischerblattes 6 mit einem Auflagewinkel zur Scheibe 2 von etwa 90° bestehen verschiedene Möglichkeiten.

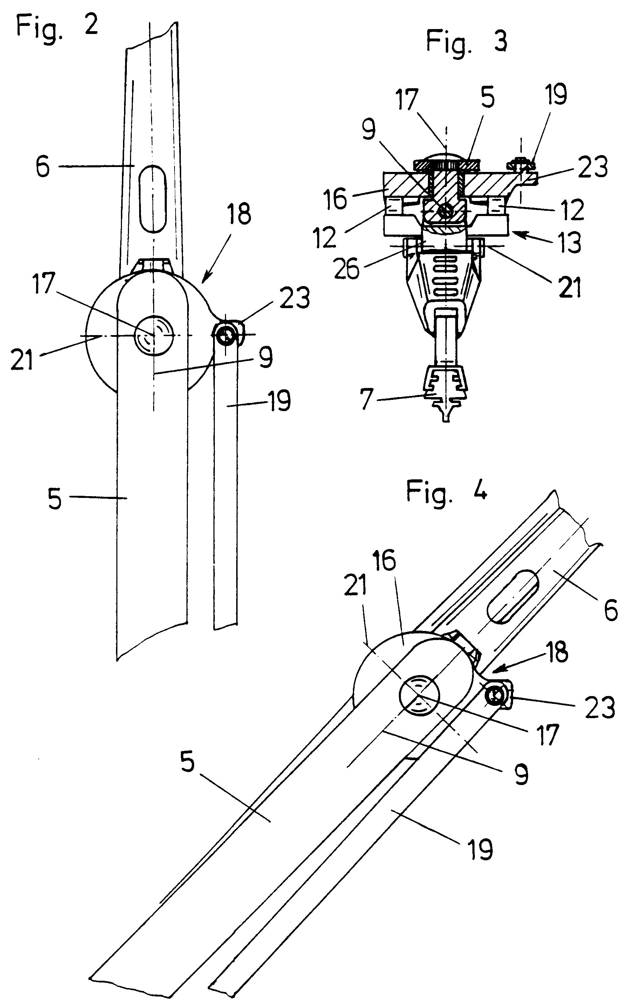

Eine erste Ausführung ist in Fig. 2 bis 4 gezeigt. Eine Steuerkurve 12 ist an einer Platte 16 bzw. Scheibe vorgesehen, die am freien Ende des Wischerarmes 5 um eine zur Wischerarmschwenkachse 8 parallele Achse 17 auf dem Tragteil 27 drehbar gelagert ist und eine Parallelführung 18 aufweist. Diese umfaßt einen Parallelogrammlenker 19, der an einem Fortsatz 23 der Platte 16 angelenkt ist. Beim Verschwenken des Wischerarmes 5 wird somit, wie aus dem Vergleich der Fig. 2 und 4 ersichtlich ist, die Platte 16 und damit die an der Unterseite der Platte 6 angeordnete Steuerkurve 12 am Wischerarm 5 verdreht. An der Steuerkurve 12 liegt ein am Lagerteil 26 des Wischerblattes 6 vorgesehene Abtastelement 13 an, das aus zwei seitlich abstehenden Fingern oder Rollen besteht. Das Wischerblatt 6 wird daher beim Verdrehen der Platte 16 um die Längsachse 9 verschwenkt, sodaß die Normalstellung des Wischerblattes 6 annähernd bzw. bei Anpassung der Steuerkurve an die Krümmung der Fahrzeugscheibe 2 exakt gewährleistet ist.

In der zweiten Ausführung nach Fig. 5 wird das die Steuerkurve 12 abgreifende Abtastelement 13 durch federnde Arme 15 gebildet, um in den Umkehrpunkten ein federndes Überschwenken des Wischerblattes 6 zu gestatten und dabei gleichzeitig das Wischerblatt 6 zu dämpfen. Dies reduziert Wischgeräusche und vermeidet das sogenannte Rattern des Wischerblattes. In der Ausführung nach den Fig. 6 und 7 ist die Längsachse 9 nicht durch einen Lagerstift, sondern durch ein Federblatt 14 gebildet, das ins Wischerblatt 6 und die Achse 17 eingesetzt ist.

In allen Ausführungen weist das Wischerblatt 6 aufgrund der senkrecht zueinander ausgerichteten Schwenkachsen 9 und 21 eine kreuzgelenkartige Aufhängung auf, die es im Zusammenwirken mit der der Fahrzeugscheibe 2 angepaßt gekrümmten Steuerkurve 12 ermöglicht, den Auflagewinkel des Wischerblattes 6 auf der Scheibe 2 während der gesamten Wischerarmbewegung zumindest im wesentlichen konstant zu halten. Der Winkel zwischen dem Wischerblatt 6 und dem Wischerarm 5 ist dabei ohne Bedeutung.

## Patentansprüche

1. Scheibenwischeranlage für Fahrzeuge mit einer über ihre Breite gekrümmten Fahrzeugscheibe (2), mit mindestens einem angetriebenen Wischerarm (5), an dessen freiem Ende ein Wischerblatt (6) vorgesehen ist, das in der Position zum Wischerarm (5) veränderbar ist, und mit einem vom Wischerarmantrieb abgeleiteten Antrieb für die Positionsänderung des Wischerblattes (6), der eine Steuerkurve (12) und ein während der Verschwenkung des Wischerarmes (5) entlang der Steuerkurve (12) geführtes Abtastelement (13) umfaßt, wobei die Steuerkurve (12) an einer Platte (16) ausgebildet ist, die auf dem freien Ende des Wischerarmes (5) um eine zur Wischerarmschwenkachse (8) parallele Achse (17) drehbar gelagert und der der abgeleitete Antrieb zugeordnet ist, dadurch gekennzeichnet, daß das Wischerblatt (6) um eine Querachse (21) schwenkbar an einem Lagerteil (26) und der Lagerteil (26) um eine parallel zum Wischerblatt (6) sich erstreckende Längsachse (9) schwenkbar an einem am freien Ende des Wischerarmes (5) vorgesehenen Tragteil (27) angeordnet ist, und daß das Abtastelement (13) am Lagerteil (26) des Wischerblattes (6) vorgesehen ist.

2. Scheibenwischeranlage nach Anspruch 1, dadurch gekennzeichnet, daß als Führung der Platte (16) eine Parallelführung (18) zum Wischerarmschwenkantrieb (3) vorgesehen ist.

3. Schweibenwischeranlage nach Anspruch 2, dadurch gekennzeichnet, daß die Parallelführung (18) einen fahrzeugfest angelekten Parallelogrammlenker (19) umfaßt.

4. Scheibenwischeranlage nach einem der Ansprüche 1 bis 2, dadurch gekennzeichnet, daß das Abtastelement (13) zwei federnde Arme (15) aufweist.

5. Schweibenwischeranlage nach einem der Ansprüche 1 bis 4, dadurch gekennzeichnet, daß in den Tragteil (27) und den Lagerteil (26) ein Federblatt (14) eingesetzt ist, dessen biegbarer Mittelbereich die Längsachse (9) enthält.

## Claims

1. A windscreen wiper system for vehicles with a vehicle screen (2) which is curved over its width, comprising at least one driven wiper arm (5), at the free end of which is provided a wiper blade (6) which is variable in position relative to the wiper arm (5), and a drive derived from the wiper arm drive for the change in position of the wiper blade (6), which includes a control cam (12) and a follower element (13) which is guided along the control cam (12) during the pivotal movement of the wiper arm (5), wherein the control cam (12) is provided on a plate (16) which is mounted on the free end of the wiper arm (5) rotatably about an axis (17) parallel to the wiper arm pivot axis (8) and with which the derived drive is associated, characterised in that the wiper blade (6) is arranged pivotably about a transverse axis (21) on a mounting portion (26) and the mounting portion (26) is arranged pivotably about a longitudinal axis (9) extending parallel to the wiper blade (6) on a carrier portion (27) at the free end of the wiper arm (5), and that the follower element (13) is provided on the mounting portion (26) of the wiper blade (6).

2. A windscreen wiper system according to claim 1 characterised in that the guide means for the plate (16) is a parallel guide means (18) associated with the wiper arm pivotal drive (3).

3. A windscreen wiper system according to claim 2 characterised in that the parallel guide means (18) includes a parallelogram link (19) which is pivotably mounted in fixed relationship with the vehicle.

4. A windscreen wiper system according to one of claims 1 and 2 characterized in that the follower element (13) has two resilient arms (15).

5. A windscreen wiper system according to one of claims 1 to 4 characterized in that fitted into the carrier portion (27) and the mounting portion (26) is a spring leaf (14) whose bendable central region contains the longitudinal axis (9).

## Revendications

1. Système d'essuie-glaces pour véhicules avec un pare-brise (2) de véhicule courbé sur sa largeur, comportant au moins un porte-balai (5) commandé et à l'extrémité libre duquel est prévu un balai (6) dont la position par rapport au porte-balai (5) peut être modifiée, et comportant une commande d'essuie-glace dérivée de la commande du porte-balai et destinée à modifier la position du balai (6), qui comprend une came de commande (12) et un élément de contre-came (13) guidé le long de la came de commande (12) pendant le pivotement du porte-balai (5), la came de commande (12) étant réalisée sur une plaque (16) qui, à l'extrémité libre du porte-balai (5), est montée à rotation autour d'un axe (17) parallèle à l'axe de pivotement (8) du porte-balai et à laquelle est affectée la commande dérivée, caractérisé en ce que le balai (6) est disposé sur un élément de support (26) de manière à pouvoir pivoter autour d'un axe transversal (21), en ce que l'élément de support (26) est disposé sur un élément porteur (27) prévu à l'extrémité libre du porte-balai (5) de manière à pouvoir pivoter autour d'un axe longitudinal (9) s'étendant parallèlement au balai (6) et en ce que l'élément de contre-came (13) est prévu sur l'élément de support (26) du balai (6).

2. Système d'essuie-glace selon la revendication 1, caractérisé en ce qu'un guidage parallèle (18) à la commande de pivotement (3) du porte-balai est prévu en tant que guidage de la plaque (16).

3. Système d'essuie-glace selon la revendication 2, caractérisé en ce que le guidage parallèle (18) comprend une bielle de parallélogramme (19) fixée au véhicule par une articulation.

4. Système d'essuie-glace selon la revendication 1 ou la revendication 2, caractérisé en ce que l'élément de contre-came (13) présente deux bras (15) à ressort.

5. Système d'essuie-glace selon l'une quelconque des revendications 1 à 4, caractérisé en ce que dans l'élément porteur (27) et dans l'élément de support (26) est insérée une lame de ressort (14) dont la zone centrale flexible contient l'axe longitudinal (9).
